# EUROPÄISCHE PATENTSCHRIFT

(11) **EP 1 445 165 B1**
(45) Veröffentlichungstag und Bekanntmachung des Hinweises auf die Patenterteilung: **08.03.2006**
(21) Anmeldenummer: 03002873.2
(22) Anmeldetag: 08.02.2003
(51) Int. Cl.: B62B 5/06

(54) **Deichsel für einen Handgabelhubwagen**
Drawbar for a pallet truck
Timon pour chariot transpalette

(43) Veröffentlichungstag der Anmeldung: 11.08.2004
(73) Patentinhaber: Jungheinrich Aktiengesellschaft, 22047 Hamburg (DE)
(72) Erfinder: Gerbier, Stéphane, 61200 Occagnes (FR); Launay, Stéphane, 61200 Sevigny (FR)
(74) Vertreter: Hauck, Graalfs, Wehnert, Döring, Siemons

(56) Entgegenhaltungen:
- CA-A- 1 105 894
- DE-U- 29 710 503

## Beschreibung

Die Erfindung bezieht sich auf eine Deichsel für einen Handgabelhubwagen nach dem Patentanspruch 1.

Bei derzeit gebräuchlichen Handgabelhubwagen wird die Deichsel zum Lenken und Bewegen des Fahrzeugs sowie zum Pumpen für das Heben der Last benutzt. Zur Bedienung des Hubwerks ist ein Bedienungselement erforderlich, das gut zugänglich sein soll und die Umschaltung zwischen den Funktionen Heben, Senken und Fahren ermöglicht und die auch ein feinfühliges Senken der Last erlaubt.

Eine gute Erreichbarkeit des Bedienelements ist für ein effektives Arbeiten mit dem Handgabelhubwagen besonders wichtig, insbesondere wenn das Fahrzeug gezogen wird, d. h. die Deichsel sich in geneigter Stellung vor dem Fahrzeug befindet. Das Betätigen der Funktionen bei aufrechtstehender Deichsel, z. B. wenn das Fahrzeug geschoben wird, ist daher weniger wichtig, da das Fahrzeug in den meisten Fällen aus der Palette herausgezogen und dafür die Deichsel wieder in die geneigte Stellung gebracht wird.

Für das Pumpen und Bewegen des Fahrzeugs ist es vorteilhaft, wenn der Deichselgriff mittig greifbar ist, um unnötige Lenk- und Reibungskräfte zu vermeiden. Die Betätigungskräfte am Bedienelement sollen in allen Situationen möglichst klein sein. Insbesondere soll das Bedienelement in allen Situationen relativ einfach betätigbar sein.

Es ist bekannt, eine einen schleifenförmigen Griff durchsetzende Verlängerung der Deichselstange als Lagerbauteil für einen seitlich erstreckten Betätigungshebel zu verwenden. Nachteilig bei dem bekannten Deichselkopf ist, daß er nicht mittig erfaßt werden kann. Aus DE 297 10 503 U1 ist ferner bekannt, am oberen Ende des Stangenabschnitts, der sich in den schleifenförmigen Griff hineinerstreckt, einen Steuerhebel schwenkbar zu lagern. Zum Absenken der Last muß der Hebel vom Bediener fortgedrückt werden. Ein Ziehen des Hebels zum Bediener hin schaltet die Hebenfunktion ein. Nachteilig ist bei dieser Konstruktion, daß der Bediener die Funktionen nicht gut betätigen kann, wenn er das Fahrzeug zieht, da der Steuerhebel nach oben gezogen werden muß, um ein Absenken zu bewirken.

Zudem ist das Bedienelement für eine intuitive Bedienung weniger geeignet, da das Bedienelement nicht von anderen technischen Geräten her vertraut ist. Die Bedienkräfte sind groß aufgrund des geringen Abstands des Kreispunkts vom Hebeldrehpunkt.

Der Erfindung liegt die Aufgabe zugrunde, eine Deichsel für einen Handgabelhubwagen zu schaffen, der leicht intuitiv mit linker oder rechter Hand bedienbar und bei dem ein mittiges Greifen des Deichselrohrs möglich ist, wobei die Bedienkräfte möglichst klein sind.

Diese Aufgabe wird durch die Merkmale des Patentanspruchs 1 gelöst.

Bei der erfindungsgemäßen Deichsel ist die Handhabe zur Betätigung des Zug- oder Druckelements ein schleifenfömüges, längliches Griffelement, das zwei längere annähernd parallele Elementabschnitte und zwei diese verbindende vorzugsweise gekrümmte Elementabschnitte aufweist, wobei das sich quer zur Deichselachse erstreckende Griffelement mit einem länglichen Elementabschnitt an dem Halteansatz schwenkbar gelagert ist, vorzugsweise um eine Achse quer zur Achse des Halteansatzes bzw. der Deichselstange.

Ein derartiges Griffelement hat den Vorteil, daß es aus jeder Position des Bedieners relativ zur Deichsel leicht betätigt werden kann, d. h. von Positionen des Bedieners hinter dem Deichselgriff oder von seiner Seite. Ferner ist es gleich, in welcher geneigten Lage sich die Deichsel befindet. So kann z. B. bei einem seitlichen Erfassen der Deichsel mit der gleichen Hand der Daumen das Griffelement in die eine oder andere Richtung, d. h. nach oben oder unten, aus einer neutralen Stellung heraus verschwenkt werden.

Da sich das Griffelement innerhalb des Deichselgriffes befindet und keine aus dessen Ebene markant hervortretende Abschnitte aufweist, ist auch eine unwillkürliche Betätigung des Griffelements und eine Beschädigung vermieden.

Um eine noch bequemere Betätigung zu erreichen, ist nach einer Ausgestaltung der Erfindung der dem Querabschnitt des Griffes zugeordnete lange Elementabschnitt annähernd im mittleren Bereich mit einem zum Querabschnitt hin gewölbten Unterabschnitt versehen. Der gewölbte Unterabschnitt kann aus der Ebene des Griffelements herausgewölbt sein, vorzugsweise nach oben, wenn die Deichsel hinter dem Deichselkopf betrachtet wird.

Eine ergonomisch günstige Ausgestaltung der Erfindung sieht vor, daß die Ebene des Griffes gegenüber der Deichselstange bzw. dem Halteansatz in einem spitzen Winkel vom Fahrzeug fort geneigt ist, wobei der den Querabschnitt des Griffes zugekehrte lange Endabschnitt des Griffelements annähernd in der Griffebene liegt. In der neutralen Position ist daher der dem Querabschnitt des Griffes zugewandte Elementabschnitt geschützt innerhalb der Griffebene liegend angebracht.

Nach einer anderen Ausgestaltung der Erfindung liegt die Schwenkachse des Griffelements an einer oberen Kante des Halteansatzes, die dem Gabelhubwagen zugekehrt ist. Der Halteansatz ist hohl, und ein Betätigungsabschnitt des Griffelements steht in den Halteansatz hinein, der seinerseits mit dem Zug- oder Druckelement verbunden ist. Der Betätigungsabschnitt ist nach einer weiteren Ausgestaltung der Erfindung mit gegenüberliegenden geneigten Anschlagflächen versehen, die jeweils an der Innenwandung des Halteansatzes anliegen, wenn sich das Griffelement in den ausgeschwenkten Betätigungspositionen befindet.

Nach einer weiteren Ausgestaltung der Erfindung weist der Betätigungsabschnitt Rastmittel auf, die mit dem Halteansatz zusammenwirken, um das Griffelement in seiner Neutralstellung zu verrasten. Die Verrastung kann z. B. mit Hilfe einer Rastkugel erfolgen, die federbeaufschlagt ist und mit einer Öffnung des Halteansatzes zusammenwirkt. Vorzugsweise sind in einer Querbohrung des Betätigungsabschnitts jeweils an den Enden Verriegelungskugeln angeordnet, die durch eine Feder in der Querbohrung vorgespannt werden. Die Feder kann nach einer weiteren Ausgestaltung der Erfindung von einer Hülse in der Querbohrung umgeben sein, die sich ihrerseits durch ein Auge des Zug- oder Druckelements hindurcherstreckt.

Das Griffelement weist im mittleren Bereich des einen längeren Elementabschnitts einen verdickten Lagerabschnitt auf, durch den sich ein Lagerstift erstrecken kann zur schwenkbaren Lagerung des Griffelements am Halteansatz. Zu diesem Zweck kann an der oberen Kante des Halteansatzes eine Lagerhülse angebracht sein. Der Lagerabschnitt weist nach einer weiteren Ausgestaltung der Erfindung eine Ausnehmung auf, in welche sich das obere Ende des Halteansatzes hineinerstreckt. Zwischen der Außenwandung des Halteansatzes und den inneren Wänden der Ausnehmung ist ein gewisser Abstand vorhanden, damit eine Verschwenkung des Griffelements ermöglicht ist.

Nach einer anderen Ausgestaltung der Erfindung ist das Griffelement vorzugsweise einteilig geformt einschließlich seines Betätigungsabschnitts, und zwar aus Kunststoff, einer Metallegierung oder einem anderen geeigneten Werkstoff.

Manche Handgabelhubwagen sind mit einer Bremse versehen, die durch einen Seilzug betätigt wird. Zu diesem Zweck ist ein Bremshebel am Deichselkopf anzubringen. In dem Zusammenhang sieht eine weitere Ausgestaltung der Erfindung vor, daß auf der dem Gabelhubwagen zugekehrten Seite am Halteansatz im Abstand zum Griffelement ein gebogener hohler Ansatz anbringbar ist, in den hinein ein Kabel für eine Seilzugbremse geführt ist. Am oberen Ende des gebogenen Ansatzes ist ein Bremshebel schwenkbar gelagert, wobei das Kabel mit dem Endabschnitt des Bremshebels verbunden ist, der in den hohlen Ansatz hineinsteht. Der Bremshebel ist vorzugsweise in einer Ebene schwenkbar, die annähernd parallel zur Ebene des Griffes verläuft. Die Schwenkebene des Bremshebels kann jedoch auch zum Querabschnitt des Deichselgriffes hin etwas geneigt sein, so daß beim Betätigen des Bremshebels dieser in Richtung Querabschnitt des Griffes gezogen wird. Der Bremshebel ist vorzugsweise winklig, wobei der eine Schenkel am Ansatz gelagert ist und der andere den Griffabschnitt bildet. Mit Hilfe des Bremshebels kann eine feinfühlige Abbremsung des Handgabelhubwagens bewerkstelligt werden, beispielsweise wenn der Hubwagen eine Rampe hinabgefahren werden soll.

Es ist jedoch vorteilhaft, die Bremse zu arretieren, um den Handgabelhubwagen an Ort und Stelle zu halten, wenn er z. B. an einer Steigung steht. In diesem Zusammenhang sieht eine weitere Ausgestaltung der Erfindung vor, daß in einem Schlitz des Bremshebels ein von einer Feder vorgespannter zweiarmiger Rasthebel kippbar gelagert ist, wobei ein Arm dem Griffabschnitt des Bremshebels zugeordnet ist und der andere Arm mit einer Rastfläche des Ansatzes zusammenwirkt, wenn der Bremshebel um einen vorgegebenen Winkel verschwenkt worden ist. Eine Verrastung erfolgt, wenn der Bremshebel soweit gezogen worden ist, daß ein wirksamer Bremseingriff vorliegt. Durch Erfassen des Arms des Rasthebels am Griffabschnitt des Bremshebels kann diese Verrastung wieder leicht gelöst werden.

Die Erfindung soll nachfolgend anhand eines in Zeichnungen dargestellten Ausführungsbeispiels näher erläutert werden.
- Fig. 1: zeigt perspektivisch und in auseinandergezogener Darstellung einen Deichselkopf nach der Erfindung,
- Fig. 2: zeigt die Seitenansicht eines Deichselkopfes nach der Erfindung von einem Handgabelhubwagen her gesehen,
- Fig. 3: zeigt einen Schnitt durch die Darstellung nach Fig. 2 entlang der Linie 3-3,
- Fig. 4: zeigt vergrößert einen Schnitt durch die Darstellung nach Fig. 3 entlang der Linie 4-4,
- Fig. 5: zeigt eine ähnliche Darstellung wie Fig. 2, jedoch bei betätigtem Griffelement,
- Fig. 6: zeigt einen Schnitt durch die Darstellung nach Fig. 5 entlang der Linie 6-6,
- Fig. 7: zeigt eine ähnliche Darstellung wie Fig. 6, jedoch mit einer entgegengesetzt gerichteten Betätigung des Griffelements,
- Fig. 8: zeigt einen Deichselkopf vergleichbar dem nach Fig. 2 zusätzlich mit einem Bremshebel in unbetätigter Stellung,
- Fig. 9: zeigt eine ähnliche Darstellung wie Fig. 8, jedoch bei verrastetern Bremshebel.

In den Figuren ist bei 10 das äußere Ende einer Deichselstange darstellt für einen nicht weiter gezeigten Handgabelhubwagen. Die Anbringung und die Funktion einer derartigen Deichsel 10 ist allgemein bekannt und soll daher nicht weiter erläutert werden. Die Deichselstange 10 ist hohl und im Querschnitt rechteckig. Mit der Deichselstange 10 ist ein schleifenförmiger Griff 12 verbunden. Er besteht aus zwei annähernd einen rechten Winkel zueinander bildenden relativ geraden Abschnitten 14, 16, die z. B. an gegenüberliegenden Seiten schräg mit der Deichselstange 10 verschweißt sind und einem C-förmig gebogenen Abschnitt 18, der mit den Abschnitten 14, 16 verbunden ist und im mittleren Bereich einen annähernd quer zur Achse der Deichsel 10 sich erstreckenden Griffabschnitt 20a bildet. Generell ist die Form eines derartigen Deichselgriffes bekannt.

In den Griff 12 erstreckt sich in Verlängerung der Stange 10 ein Halteansatz 20. Er weist an seinem oberen Ende an einer Kante eine Lagerhülse 22 auf, die sich über die Breite der Stange bzw. des Halteansatzes 20 erstreckt. Die Hülse 22 ist auf der dem nicht gezeigten Gabelhubwagen zugekehrten Kante angeordnet.

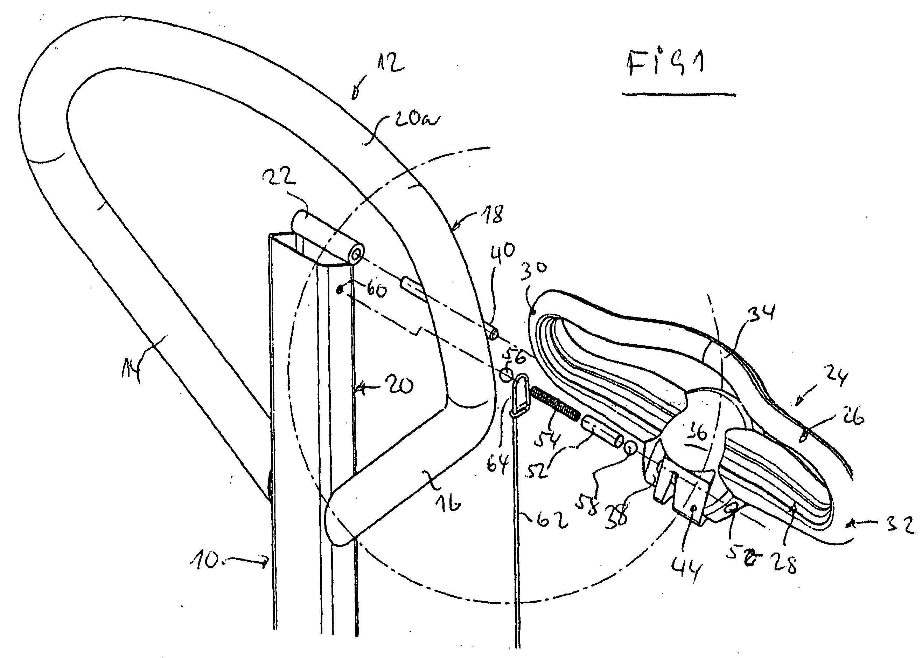

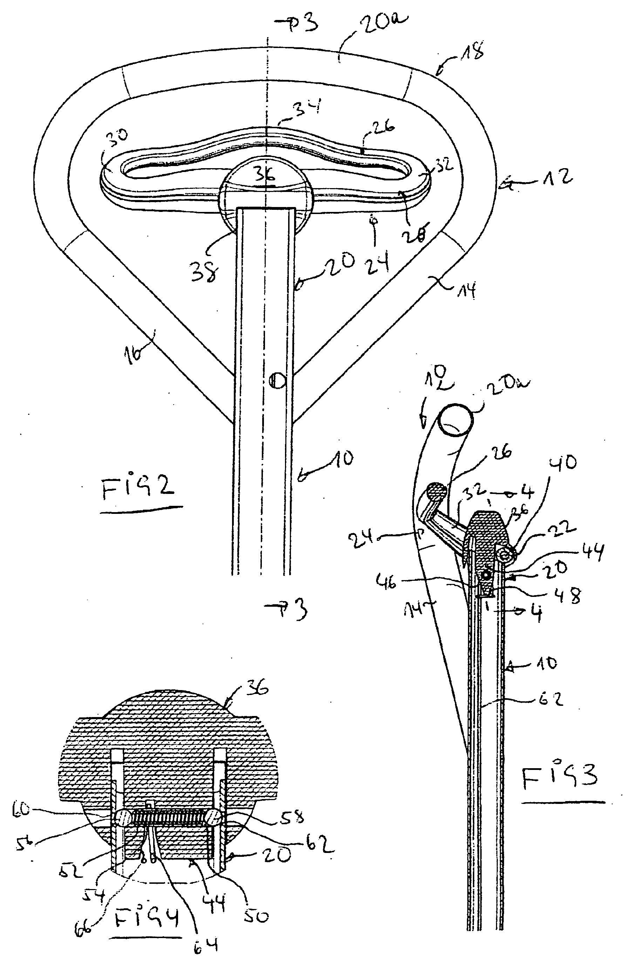

Wie etwa aus Fig. 2 zu erkennen, lagert das obere Ende des Halteansatzes 20 ein längliches, sich quer zum Halteansatz 20 erstreckendes Griffelement 24, das in Fig. 1 getrennt dargestellt ist. Das Griffelement 24 weist zwei längere Abschnitte 26, 28 auf, die annähernd parallel verlaufen und an den Enden über gebogene Abschnitte 30, 32 miteinander verbunden sind. Das längliche Griffelement 24 ist auf diese Weise oval schleifenförmig, wobei jedoch der längere Elementabschnitt 26 in der Mitte bei 34 vom anderen Abschnitt 28 fort ausgewölbt ist. Die Elementabschnitte 26, 28, 30 und 32 spannen im wesentlichen eine gemeinsame Ebene auf, aus der heraus der gewölbte Abschnitt 34 sich etwas nach oben erhebt.

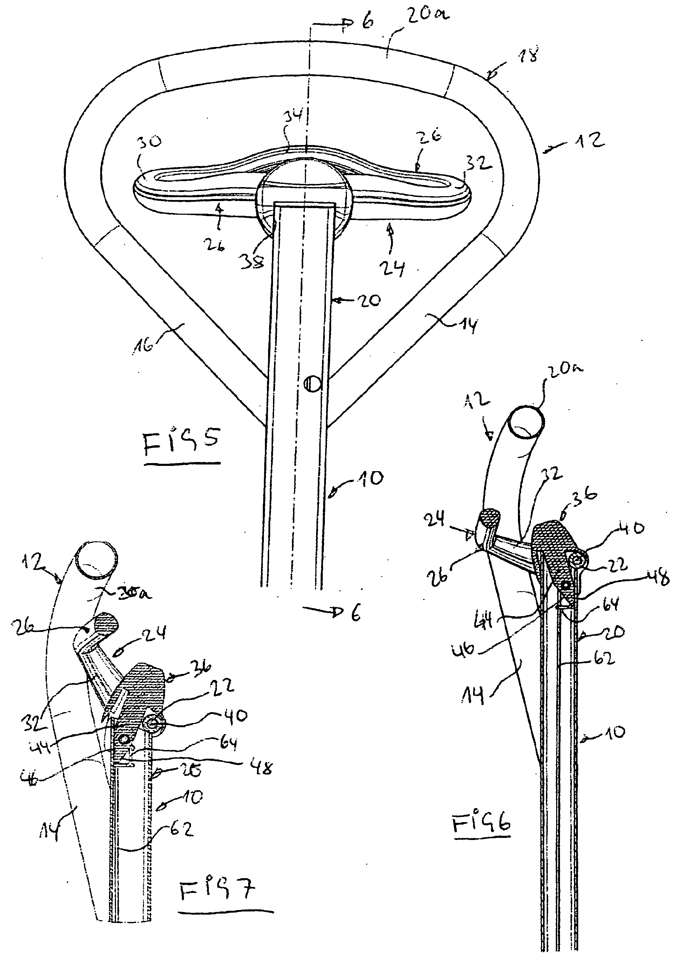

Die Elementabschnitte 26, 28 erstrecken sich im wesentlichen quer zur Deichselachse, und die Verbindungsabschnitte 30, 32 liegen relativ nahe an den zugekehrten gebogenen Abschnitten des Griffabschnitts 18. Der längere Elementabschnitt 26 liegt relativ nahe zum Griffabschnitt 20a und im übrigen auch annähernd in der Ebene des Griffes 12, der, wie aus Fig. 3 hervorgeht, gegenüber der Achse der Deichsel 10 leicht geneigt ist, und zwar zum Bediener hin, wenn er vor dem nicht gezeigten Gabelhubwagen steht. Der Elementabschnitt 26 ist daher durch den Griff 12 geschützt. Man erkennt im übrigen, daß er in allen Griffpositionen und in allen Standpositionen, die der Bediener relativ zur Deichsel 10 einnehmen kann, leicht betätigbar ist. Das Griffelement 24 ist um eine Achse quer zur Achse der Deichsel 10 verschwenkbar gelagert. Auf die Lagerung wird nachfolgend eingegangen.

Der Griff 24 ist einteilig geformt, und der Elementabschnitt 28 weist einen verdickten Lagerabschnitt 36 auf, der vom Fahrzeug aus betrachtet annähernd kreisförmige Kontur hat und eine Ausnehmung 38 besitzt, in welche das obere Ende des Halteansatzes 20 hineinsteckbar ist. Dabei gelangt die Lagerhülse 22 in Ausrichtung zu zwei Querbohrungen (nicht gezeigt) durch welche hindurch ein Lagerstift 40 (Fig. 1) gesteckt wird, der außerdem durch die Lagerhülse 22 geführt wird. Auf diese Weise ist das Griffelement 24 um den Lagerstift 40 schwenkbar gelagert.

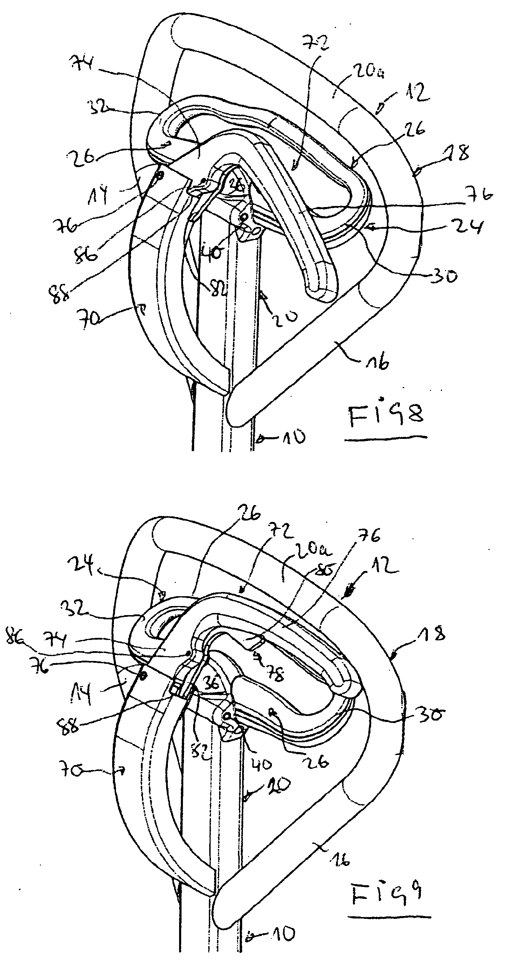

Der Lagerabschnitt 36 weist innerhalb der Ausnehmung 38 einen Betätigungsabschnitt 44 auf, der in den Halteansatz 20 hineinsteht und der auf gegenüberliegenden Seiten Anschlagflächen 46, 48 aufweist. Die Aufnahme des oberen Endes des Halteansatzes 20 in dem Lagerabschnitt 36 ist auch in Fig. 4 zu erkennen. Man erkennt ferner, daß der Betätigungsabschnitt 44 eine Querbohrung 50 aufweist, in der eine Hülse 52 sitzt, die eine Schraubenfeder 54 aufinimmt. Die Feder setzt zwei Rastkugeln 56, 58 an den Enden der Querbohrung 52 unter Spannung, so daß sie rastend mit einer Öffnung 60 bzw. 62 im Halteansatz 20 zusammenwirken. Daher ist das Griffelement 24 in der in Fig. 3 gezeigten Position, die auch die neutrale Position ist, verrastet.

In der Deichselstange 10 ist eine Druckstange 62 geführt, die am unteren Ende mit einem nicht gezeigten Hubwerk für den Gabelhubwagen in Verbindung steht. Am oberen Ende weist die Stange 62 ein Auge 64 auf (Fig. 1), das durch einen Schlitz 66 in den Betätigungsabschnitt 44 eingeführt ist, wodurch die Hülse 52 sich durch das Auge 64 hindurch erstrecken kann. Wird das Griffelement 24 verschwenkt in die in den Fign. 6 oder 7 gezeigten Positionen, wird daher die Druckstange 62 verstellt, worauf weiter unten noch eingegangen wird.

Der Bediener steht im Hinblick auf die Fign. 3, 6 und 7 auf der linken Seite der Deichsel, während das nicht gezeigte Fahrzeug auf der rechten Seite angeordnet ist. Wie aus diesen Figuren zu erkennen, nimmt das Griffelement 24 in Fig. 3 eine mittlere Position ein, in der es, wie in Fig. 4 gezeigt ist, verrastet ist. In dieser Position ragt der Betätigungsabschnitt 44 mittig in den Halteansatz 20. Zieht der Bediener das Griffelement 24 zu sich her und verschwenkt es gemäß Fig. 6 entgegengesetzt der Uhrzeigerrichtung, dann verschwenkt der Betätigungsabschnitt 44 nach rechts, wobei die Schrägfläche 48 mit der zugekehrten Wandung des Halteansatzes 20 zur Anlage gelangt und dadurch die Schwenkbewegung begrenzt. In dieser Position des Griffelements 24 wird die Druckstange 62 nach unten gezogen und betätigt auf diese Weise das nicht gezeigte Ventil für das Hubwerk, wodurch bei entsprechender Pumpbewegung der Deichsel die Gabel des Handgabelhubwagens angehoben wird. Die Druckstange 62 ist durch eine Feder vorgespannt, so daß beim Loslassen des Griffelements 26 dieses automatisch in die verrastete Neutralposition nach Fig. 3 zurückverschwenkt wird.

Betätigt der Bediener das Griffelement 24 in die entgegengesetzte Richtung gemäß Fig. 7 von sich fort, gelangt die Anlagefläche 46 des Betätigungsabschnitts 44 gegen die gegenüberliegende Wand des Halteansatzes 20 zur Anlage. Bei dieser Bewegung des Betätigungsabschnitts 44 wird die Druckstange 62 nach oben bewegt, wodurch das Pumpventil in eine Position gebracht wird, in der die Hydraulikflüssigkeit aus dem Hubzylinder zurück in ein Reservoir gelenkt wird, wodurch die Gabel durch ihr Eigengewicht bzw. das Gewicht der Last abgesenkt werden kann.

Fign. 8 und 9 zeigen den Deichselgriff nach den voranstehenden Figuren, so daß Teile, die mit denen nach den Fign. 1 bis 7 gleich sind, mit gleichen Bezugszeichen versehen sind. In den Fign. 8 und 9 ist ein gebogener rohrartiger Ansatz 70 mit dem Halteansatz 20 verbunden, beispielsweise durch Schweißung. Die Anbindung erfolgt annähernd in dem Bereich, in dem die Abschnitte 14, 16 seitlich an der Deichselstange 10 angebracht sind. Der rohrartige Ansatz 70 erstreckt sich nach oben bis in die Höhe des Lagerabschnitts 36 des Griffelements 24. Der rohrförmige Ansatz 70 ist z. B. mit dem Halteansatz 20 verschweißt. Es ist jedoch auch eine lösbare Befestigung denkbar.

Ein annähernd rechtwinkliger Bremshebel 72 weist einen ersten Schenkel 74 und einen zweiten Schenkel 76 auf. Der erste Schenkel 74 erstreckt sich in den rohrförmigen Ansatz 70 hinein und ist um eine Schwenkachse 76 schwenkbar am Ansatz 70 gelagert. Die Schwenkachse ist annähernd senkrecht zur Achse der Stange 10 oder zur Ebene, welche durch den Griff 12 aufgespannt ist. Mit dem Schenkel 74 ist (nicht zu sehen) das obere Ende eines Kabelzuges verbunden, der durch die Deichselstange 10 geführt ist und am anderen Ende mit einer Bremse zusammenwirkt. In der Ruheposition erstreckt sich der Schenkel 76, der den Griffabschnitt für den Bremshebel 72 bildet, etwas nach unten, wie in Fig. 8 dargestellt ist. Bei der Betätigung wird der Bremshebel 72 entgegengesetzt zur Uhrzeigerrichtung verschwenkt, wobei die maximale Verschwenkung in Fig. 9 angedeutet ist, wobei der Griffabschnitt 76 annähernd parallel zum Griffabschnitt 20a verläuft. Der Bediener kann den Bremshebel betätigen, wenn er gleichzeitig den Griff 12 erfaßt.

In einem Schlitz des Bremshebels 72 ist ein Rasthebel 78 gelagert, der wiederum annähernd rechtwinklig ist und einen Betätigungsabschnitt 80 aufweist und einen Rastabschnitt 82. Die Schwenkachse des Rasthebels 78 ist bei 86 zu erkennen. Der Rasthebel 78 ist mit Hilfe einer nicht gezeigten Feder vorgespannt und befindet sich normalerweise in einer Position, wie sie in Fig. 8 gezeigt ist, in der der Betätigungsabschnitt 80 im Schlitz des Bremshebels 72 versenkt ist, während der Rastabschnitt 82 gegen die Außenseite des rohrförmigen Ansatzes 70 anliegt. Der rohrförmige Ansatz 70 weist am oberen Ende eine Aussparung 88 auf. Wird beim Verschwenken des Bremshebels 72 zu Bremszwecken gemäß Fig. 9 die Schwenkbewegung soweit ausgeführt, daß das freie Ende des Rastabschnitts 82 die Ausnehmung 88 erreicht, verschwenkt die Feder den Rasthebel 78 in Uhrzeigerrichtung, so daß der Rastabschnitt 82 mit dem Grund der Ausnehmung 88 zusammenwirkt, wie dies in Fig. 9 dargestellt ist. Auf diese Weise ist der Bremshebel 72 verrastet und die Bremse festgestellt.

Soll die Bremse gelöst werden, ergreift der Bediener den aus dem Schlitz vorstehenden Betätigungsabschnitt 80 des Rasthebels 78 und zieht ihn in den Schlitz hinein, wodurch der Rastabschnitt 82 mit der Ausnehmung 88 außer Eingriff gelangt. Dadurch kann der Bremshebel 72 automatisch in die in Fig. 8 gezeigte Position zurückschwenken.

## Patentansprüche

1. Deichsel für einen Handgabelhubwagen mit einer hohlen Deichselstange (10), die am unteren Ende an einem Halter für ein lenkbares Rad angelenkt ist und am anderen Ende mit einem schleifenförmigen Griff (12) verbunden ist, der am hinteren Ende einen quer zur Deichselstange verlaufenden Griffabschnitt (20a) aufweist, einem in das Innere des Griffes hineinstehenden Halteansatz (20) in Verlängerung der Deichselstange, einer schwenkbar am Halteansatz gelagerten Handhabe (24) die über ein Zug- oder Druckelement innerhalb der Deichselstange mit einem Hubwerk gekoppelt ist, wobei die Handhabe (24) eine mittlere neutrale Schwenkposition aufweist sowie zwei gegenüberliegende Schwenkpositionen, in denen sie das Hubwerk betätigt für einen Heben- oder Senkenvorgang, **dadurch gekennzeichnet, daß** die Handhabe ein schleifenförmiges, längliches Griffelement (24) ist mit zwei annähernd parallel verlaufenden langen Elementabschnitten (26, 28), die sich quer zur Deichselachse erstrecken und zwei die langen Elementabschnitte (26, 28) verbindenden gebogenen kurzen Elementabschnitten (30, 32), die nahe an den seitlichen Griffabschnitten des Deichselgriffes (12) liegen, wobei die Elementabschnitte annähernd in einer gemeinsamen Ebene liegen und der dem Handgabelhubwagen zugekehrte längere Elementabschnitt (28) schwenkbar am Halteansatz (20) gelagert ist.

2. Deichsel nach Anspruch 1, **dadurch gekennzeichnet, daß** der andere längere Elementabschnitt (26) annähernd mittig einen zum quer verlaufenden Griffabschnitt (20a) hin ausgewölbten Unterabschnitt (34) aufweist.

3. Deichsel nach Anspruch 2, **dadurch gekennzeichnet, daß** der Unterabschnitt (34) aus der Ebene der Elementabschnitt heraus nach oben gewölbt ist.

4. Deichsel nach einem der Ansprüche 1 bis 3, **dadurch gekennzeichnet, daß** die Ebene des Griffes (12) gegenüber der Stangenachse vom Hubwagen fort in einem spitzen Winkel geneigt ist und der dem Querabschnitt (20) des Griffes (12) zugekehrte lange Elementabschnitt (26) annähernd in der Griffebene liegt.

5. Deichsel nach einem der Ansprüche 1 bis 4, **dadurch gekennzeichnet, daß** die Schwenkachse des Griffelements (24) an der oberen Kante des Halteansatzes (20) liegt, die dem Gabelhubwagen zugekehrt ist und ein Betätigungsabschnitt (44) des Griffelements (24) in den hohlen Halteansatz (20) hineinsteht, wobei das Zug- oder Druckelement (62) an dem Betätigungsabschnitt (44) angebracht ist.

6. Deichsel nach Anspruch 5, **dadurch gekennzeichnet, daß** der Betätigungsabschnitt (44) am inneren Ende gegenüberliegende Anschlagflächen (46, 48) aufweist, die in den gegenüberliegenden Schwenkposition des Griffelements (24) an einer inneren Wand des Halteansatzes (20) anliegen.

7. Deichsel nach Anspruch 5 oder 6, **dadurch gekennzeichnet, daß** der Betätigungsabschnitt (44) Rastmittel aufweist, die mit dem Halteansatz (20) zusammenwirken, um das Griffelement (24) in der Neutralstellung zu verrasten.

8. Deichsel nach Anspruch 7, **dadurch gekennzeichnet, daß** die Rastmittel von mindestens einer von einer Feder (54) vorgespannten Rastkugel (56, 58) aufweisen, die mit einer Öffnung (60, 62) zusammenwirkt.

9. Deichsel nach Anspruch 8, **dadurch gekennzeichnet, daß** der Betätigungsabschnitt (44) eine durchgehende Querbohrung (50) aufweist, an deren Enden jeweils eine Rastkugel (56, 58) angeordnet ist, wobei die Rastkugeln (56, 58) von einer Feder (54) in der Querbohrung (50) vorgespannt werden.

10. Deichsel nach Anspruch 9, **dadurch gekennzeichnet, daß** die Feder (54) von einer Hülse (52) in der Querbohrung (50) umgeben ist und die Hülse (52) sich durch ein Auge (64) des Zug- oder Druckelements (62) hindurcherstreckt.

11. Deichsel nach einem der Ansprüche 5 bis 10, **dadurch gekennzeichnet, daß** an der oberen Kante des Halteansatzes (20) eine Lagerhülse (22) angebracht ist, durch welche sich ein Lagerstift (40) hindurcherstreckt, der an den Enden in einer Querbohrung sitzt, die in einem verdickten Lagerabschnitt (36) des Elementabschnitts (28) sitzt.

12. Deichsel nach Anspruch 11, **dadurch gekennzeichnet, daß** der Halteansatz (20) in eine Ausnehmung (38) des Lagerabschnitts (36) hineinsteht, wobei zwischen den Wänden der Ausnehmung (38) und der Wandung des Halteansatzes (20) ein Abstand vorgesehen ist.

13. Deichsel nach Anspruch 11 oder 12, **dadurch gekennzeichnet, daß** der Lagerabschnitt (36) zum Querabschnitt (20a) des Deichselkopfes (12) hin konkav gewölbt ist.

14. Deichsel nach einem der Ansprüche 11 bis 13, **dadurch gekennzeichnet, daß** der Lagerabschnitt (26) von der Bedienerseite des Handgabelhubwagens gesehen eine kreisförmige Kontur aufweist.

15. Deichsel nach einem der Ansprüche 1 bis 14, **dadurch gekennzeichnet, daß** das Griffelement (24) einschließlich des Betätigungsabschnitts (44) einteilig aus Kunststoff, einer Metallegierung oder einem anderen geeigneten Werkstoff gefertigt ist.

16. Deichsel nach einem der Ansprüche 1 bis 15, **dadurch gekennzeichnet, daß** am Halteansatz (20) im Abstand zum Griffelement (24) ein gebogener hohler Ansatz (70) anbringbar ist, in den hinein ein Kabel für eine Seilzugbremse des Handgabelhubwagens geführt ist, am oberen Ende des Ansatzes (70) ein Bremshebel (72) schwenkbar gelagert ist, wobei das Kabel mit dem Endabschnitt (74) des Bremshebels (72) verbunden ist, der in den hohlen Ansatz (70) hineinsteht.

17. Deichsel nach Anspruch 16, **dadurch gekennzeichnet, daß** der Bremshebel (72) in einer Ebene verschwenkbar ist, die annähernd parallel zur Ebene des Deichselgriffes (12) verläuft.

18. Deichsel nach Anspruch 16 oder 17, **dadurch gekennzeichnet, daß** der Bremshebel (72) winklig ist, wobei der eine Schenkel am Ansatz (70) gelagert ist und der andere einen Griffabschnitt bildet.

19. Deichsel nach einem der Ansprüche 16 bis 18, **dadurch gekennzeichnet, daß** in einem Schlitz des Bremshebels (72) ein von einer Feder vorgespannter zweiarmiger Rasthebel (78) kippbar gelagert ist, wobei ein Arm (80) dem Griffabschnitt (76) des Bremshebels (72) zugeordnet ist und der andere Arm. (82) mit einer Rastfläche des Ansatzes (70) zusammenwirkt, wenn der Bremshebel (72) um einen vorgegebenen Winkel verschwenkt worden ist.

20. Deichsel nach Anspruch 19, **dadurch gekennzeichnet, daß** am freien Ende des Ansatzes (70) eine Aussparung (88) geformt ist, deren Grund die Rastfläche bildet.

21. Deichsel nach einem der Ansprüche 17 bis 10, **dadurch gekennzeichnet, daß** der Ansatz (70) lösbar am Halteabschnitt (20) anbringbar ist.

## Claims

1. A tiller for a pedestrian-controlled fork-lift truck, comprising a hollow tiller rod (10) which has its lower end hinged to a support for a steerable wheel and has its other end connected to a loop-shaped handle (12) which, at the rear end, has a gripping portion extending crosswise to the tiller rod (20a), a retaining extension extending into the interior of the handle (20) as an elongation of the tiller rod, a handle means (24) pivotally supported by the retaining extension which is coupled to a lifting means via a pusher or puller element within the tiller rod, wherein the handle means (24) having an intermediate neutral pivoting position and two opposed pivoting positions in which it actuates the lifting means for a lifting or lowering operation, **characterized in that** the handle means is a loop-shaped elongated gripping element (24) including two approximately parallel extending long element portions (26, 28) which extend crosswise to the tiller axis, and two curved, short element portions (30, 32) interconnecting the long element portions (26, 28) which are located adjacent to the lateral gripping portions of the tiller handle (12) with the element portions being approximately in a common plane and the longer element portion (28) facing the pedestrian-controlled fork-lift truck being pivotally supported by the retaining extension (20).

2. The tiller according to claim 1, **characterized in that** the other longer element portion (26) approximately centrally has a sub-portion (34) which is cambered out towards the crosswise extending gripping portion (20a).

3. The tiller according to claim 2, **characterized in that** the sub-portion (34) is cambered out upwardly from the plane of the element portions.

4. The tiller according to any one of claims 1 to 3, **characterized in that** the plane of the handle (12) is inclined away from the fork-lift truck at an acute angle with respect to the rod axis and the long element portion (26) facing the transverse portion (20) of the handle (12) is located approximately in the handle plane.

5. The tiller according to any one of claims 1 to 4, **characterized in that** the pivoting axis of the gripping element (24) is at the upper edge of the retaining extension (20) that faces the fork-lift truck and an actuating portion (44) of the gripping element (24) protrudes into the hollow retaining extension (20) wherein the pusher or puller element (62) is mounted on the actuating portion (44).

6. The tiller according to claim 5, **characterized in that** the actuating portion (44) has opposite stop surfaces (46, 48) at the inner end which bear on an inner wall of the retaining extension (20) in the opposed pivoting positions of the gripping element (24).

7. The tiller according to claim 5 or 6, **characterized in that** the actuating portion (44) has snapping means which interact with the retaining extension (20) to cause the gripping element (24) to be snapped into the neutral position.

8. The tiller according to claim 7, **characterized in that** the snapping means have at least one snapping ball (56, 58) biased by a spring (54) which interacts with an opening (60, 62).

9. The tiller according to claim 8, **characterized in that** the actuating portion (44) has a transverse through bore (50) at the ends of which a snapping ball each (56, 58) is arranged, the snapping balls (56, 58) being biased by a spring (54) in the transverse bore (50).

10. The tiller according to claim 9, **characterized in that** the spring (54) is surrounded by a sleeve (52) in the transverse bore (50) and the sleeve (52) extends through an eye (64) of the pusher or puller element (62).

11. The tiller according to any one of claims 5 to 10, **characterized in that** the upper edge of the retaining extension (20) has mounted thereon a bearing sleeve (22) which is extended through by a bearing pin (40) which, at the ends, is seated in a transverse bore which is seated in a thickened supporting portion (36) of the element portion (28).

12. The tiller according to claim 11, **characterized in that** the retaining extension (20) projects into a recess (38) of the supporting portion (36) with a spacing being provided between the walls of the recess (38) and the wall of the retaining extension (20).

13. The tiller according to claim 11 or 12, **characterized in that** the supporting portion (36) is concavely cambered towards the transverse portion (20a) of the tiller head (12).

14. The tiller according to any one of claims 11 to 13, **characterized in that** the supporting portion (26) is of a circular contour as viewed from the operator side of the pedestrian-controlled fork-lift truck.

15. The tiller according to any one of claims 1 to 14, **characterized in that** the gripping element (24) including the actuating portion (44) is integrally formed from a plastic, a metal alloy or another suitable material.

16. The tiller according to any one of claims 1 to 15, **characterized in that** a curved hollow extension (70), into which a cable is passed for a cable brake of the pedestrian-controlled fork-lift truck, can be mounted on the retaining extension (20) at a spacing from the gripping element (24), a brake lever (72) is pivotally supported at the upper end of the extension (70) with the cable being joined to the end portion (74) of the brake lever (72) that projects into the hollow extension (70).

17. The tiller according to claim 16, **characterized in that** the brake lever (72) is pivotable in a plane which extends approximately in parallel with the plane of the tiller handle (12).

18. The tiller according to claim 16 or 17, **characterized in that** the brake lever (72) is angularly shaped, one leg being supported by the extension (70) and the other one forming a gripping portion.

19. The tiller according to any one of claims 16 to 18, **characterized in that** a two-armed snapping lever (78) which is biased by a spring is tiltably supported in a slot of the brake lever (72), one arm (80) being associated with the gripping portion (76) of the brake lever (72) and the other arm (82) interacting with a stop surface of the extension (70) after the brake lever (72) is pivoted through a predetermined angle.

20. The tiller according to claim 19, **characterized in that** the free end of the extension (70) has formed thereon a recess (88) the bottom of which constitutes the stop surface.

21. The tiller according to any one of claims 17 to 20, **characterized in that** the extension (70) is adapted to be releasably attached to the retaining extension (20).

## Revendications

1. Timon pour un chariot élévateur à fourche manuel avec une tige de timon creuse (10), articulée à son extrémité inférieure sur un support de roue orientable et reliée à son autre extrémité à une poignée en forme de boucle (12) qui comporte à son extrémité arrière, une partie de poignée (20a) positionnée perpendiculairement à la tige de timon, un support (20) pénétrant à l'intérieur de la poignée dans le prolongement de la tige de timon, une manette (24) inclinable disposée sur le support, couplée via un élément de traction ou de poussée à l'intérieur de la tige de timon, à un dispositif de levage, la manette (24) présentant une position d'inclinaison centrale neutre ainsi que deux positions d'inclinaison opposées, dans lesquelles le dispositif de levage est actionné pour la montée ou la descente, **caractérisé en ce que** la manette est un élément de poignée longitudinal, en forme de boucle (24), comportant deux segments d'éléments longs, s'étendant de manière sensiblement parallèle (26, 28), qui sont disposés perpendiculairement à l'axe du timon, et deux segments d'éléments courts cintrés (30, 32) reliant les deux segments d'éléments longs (26, 28) situés près des segments de poignée latéraux de la poignée du timon (12), les segments d'éléments se trouvant approximativement dans le même plan et le segment d'élément le plus long (28), orienté vers le chariot élévateur à fourche manuel étant positionné de manière inclinable sur le support (20).

2. Timon selon la revendication 1, **caractérisé en ce que** l'autre segment d'élément plus long (26) comporte un sous-segment bombé (34), sensiblement central, positionné perpendiculairement au segment de poignée (20a).

3. Timon selon la revendication 2, **caractérisé en ce que** le sous-segment (34) est bombé vers le haut hors du plan du segment d'élément.

4. Timon selon l'une quelconque des revendications 1 à 3, **caractérisé en ce que** le plan de la poignée (12) face à l'axe de la tige partant du chariot élévateur est incliné en formant un angle aigu et que le segment d'élément long (26) orienté vers le segment perpendiculaire (20) de la poignée (12) se trouve approximativement dans le plan de la poignée.

5. Timon selon l'une quelconque des revendications 1 à 4, **caractérisé en ce que** l'axe de pivotement de l'élément de poignée (24) se trouve sur le bord supérieur du support (20), qui est orienté vers le chariot élévateur à fourche et qu'un segment d'actionnement (44) de l'élément de poignée (24) pénètre dans le support creux (20), l'élément de traction ou de poussée (62) étant monté sur le segment d'actionnement (44).

6. Timon selon la revendication 5, **caractérisé en ce que** le segment d'actionnement (44) comporte à son extrémité intérieure, des surfaces de butée (46, 48) disposées face à face, qui se trouvent sur une paroi interne du support (20) lorsque l'élément de poignée (24) est dans la position d'inclinaison opposée.

7. Timon selon l'une quelconque des revendications 5 ou 6, **caractérisé en ce que** le segment d'actionnement (44) comporte des moyens de verrouillage qui coopèrent avec le support (20), pour verrouiller l'élément de poignée (24) en position neutre.

8. Timon selon la revendication 7, **caractérisé en ce que** les moyens de verrouillage comportent au moins une bille d'arrêt (56, 58) précontrainte par un ressort (54), qui coopère avec une ouverture (60, 62).

9. Timon selon la revendication 8, **caractérisé en ce que** le segment d'actionnement (44) comporte un perçage transversal traversant (50), à chaque extrémité duquel est agencée une bille d'arrêt (56, 58), les billes d'arrêt (56, 58) étant précontraintes par un ressort (54) dans le perçage transversal (50).

10. Timon selon la revendication 9, **caractérisé en ce que** le ressort (54) est entouré d'un manchon (52) dans le perçage transversal (50) et que le manchon (52) pénètre à travers un oeillet (64) de l'élément de traction ou de poussée (62).

11. Timon selon l'une quelconque des revendications 5 à 10, **caractérisé en ce que** sur le bord supérieur du support (20) est monté une douille de palier (22), à travers laquelle traverse un tenon de palier (40) dont l'extrémité est logée dans un perçage transversal qui est situé dans un segment de palier épaissi (36) du segment d'élément (28).

12. Timon selon la revendication 11, **caractérisé en ce que** le support (20) est introduit dans un évidement (38) du segment de palier (36), un espace étant prévu entre les parois de l'évidement (38) et la paroi du support (20).

13. Timon selon l'une quelconque des revendications 11 ou 12, **caractérisé en ce que** le segment de palier (36) est arrondi dans le sens concave par rapport au segment perpendiculaire (20a) de la tête de timon (12).

14. Timon selon l'une quelconque des revendications 11 à 13, **caractérisé en ce que** le segment de palier (26), considéré côté opérateur du chariot élévateur à fourche manuel, présente un contour de forme circulaire.

15. Timon selon l'une quelconque des revendications 1 à 14, **caractérisé en ce que** l'élément de poignée (24), incluant le segment d'actionnement (44) est réalisé d'un seul tenant, en matière plastique, en alliage métallique ou dans un autre matériau approprié.

16. Timon selon l'une quelconque des revendications 1 à 15, **caractérisé en ce que** sur le support (20) peut être monté, à distance de l'élément de poignée (24), une rallonge creuse cintrée (70) dans laquelle est introduit un câble destiné à un frein à câble pour le chariot élévateur à fourche manuel, et **en ce que** sur l'extrémité supérieure de la rallonge (70) est agencé un levier de frein (72) inclinable, sachant que le câble est relié au segment d'extrémité (74) du levier de frein (72) pénétrant dans la rallonge creuse (70).

17. Timon selon la revendication 16, **caractérisé en ce que** le levier de frein (72) est inclinable dans un plan sensiblement parallèle au plan de la poignée du timon (12).

18. Timon selon l'une quelconque des revendications 16 ou 17, **caractérisé en ce que** le levier de frein (72) est coudé, l'un des bras étant disposé sur la rallonge (70) et l'autre formant un segment de poignée.

19. Timon selon l'une quelconque des revendications 16 à 18, **caractérisé en ce que** dans une fente du levier de frein (72) est disposé un levier d'arrêt à deux bras (78) précontraint par un ressort et basculant, un bras (80) étant asservi au segment de poignée (76) du levier de frein (72) et l'autre bras (82) agissant conjointement avec une plage de verrouillage de la rallonge (70), lorsque le levier de frein (72) est incliné d'un angle prédéfini.

20. Timon selon la revendication 19, **caractérisé en ce que** à l'extrémité libre de la rallonge (70), une découpe (88) a été formée dont la base constitue la surface de verrouillage.

21. Timon selon l'une quelconque des revendications 17 à 20, **caractérisé en ce que** la rallonge (70) peut être montée de manière amovible sur le segment de support (20).
